# EUROPEAN PATENT APPLICATION

(11) **EP 0 642 961 A2**
(43) Date of publication of application: **15.03.1995**
(21) Application number: 94114185.5
(22) Date of filing: 09.09.1994
(51) Int. Cl.: B60T 13/26, B60T 17/18

(54) **Protection valve assembly for a double circuit pneumatic braking system**

(30) Priority: 15.09.1993 IT TO930673
(71) Applicant: KNORR-BREMSE SISTEMI PER AUTOVEICOLI COMMERCIALI S.P.A., 20043 Arcore (Milano) (IT)
(72) Inventor: Rapa, Antonio, I-20052 Monza (Milano) (IT); Milia, Gian Luca, I-20142 Milano (IT)
(74) Representative: Marchitelli, Mauro

(57) **Abstract**

A valve protection assembly for a twin-circuit pneumatic braking system includes a flow-dividing valve (52) with an inlet (54) connected to the inlet connector (1) of the valve assembly and two outlets (56, 58) connected to first and second outlet connectors (21, 22) respectively of the valve assembly. The flow-dividing valve (52) is provided to divide the flow entering it into two outlet flows which are at a substantially constant, predetermined ratio to each other.

## Description

The present invention relates to a valve assembly for protecting a twin-circuit pneumatic braking system, of the type commonly known as a reservoir-protection valve assembly.

More specifically, the invention relates to a valve protection assembly which includes:
- an inlet connector for connection to a compressed air supply,
- first and second outlet connectors, for connection to respective pressure reservoirs of the first and second braking circuits,
- third and fourth outlet connectors, for connection to a parking brake system and to auxiliary pneumatic apparatus respectively,
- first and second on-off valves, both normally closed, interposed between the inlet connector and the first and second outlet connectors respectively, and
- third and fourth on-off valves, both normally closed, having their outlets connected to the third and fourth outlet connectors respectively.

Valve protection assemblies of the type described above have been known for a long time and have been improved over the years so as to conform to ever more demanding safety standards.

Currently, the main safety provisions with which valve reservoir-protection assemblies must comply are the following:
a) in the event of failure of one of the circuits connected to its outlet connectors, the valve assembly must ensure that compressed air is supplied to the remaining circuits, despite the failure,
b) with an intact system, starting from a condition in which all the reservoirs are unpressurised, the valve assembly must be able to fill the reservoirs that supply the front and rear braking sections (main reservoirs) before filling the reservoir which supplies the parking brake system,
c) in the event of failure of one main braking section, the valve protection assembly must ensure that the reservoir which supplies the intact main section is filled despite the failure.

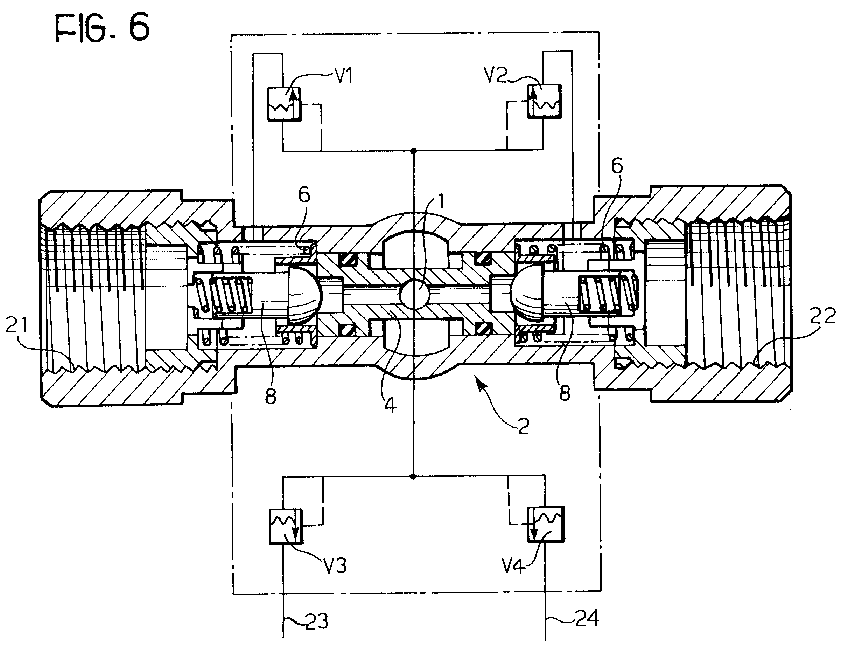

Figure 6 of the appended drawings is a schematic diagram illustrating a prior-art valve reservoir protection assembly, of the most advanced generation of such assemblies. It includes an inlet connector 1 for connection to a compressed air supply. The inlet connector 1 is connected to four, normally-closed, on-off valves indicated V1-V4. The outlets of the valves V1-V4 are connected to respective outlet connectors indicated 21, 22, 23 and 24. Two by-passes, are provided between the inlet connector 1 and the outlet connectors 21 and 22 (intended to be connected to the supply reservoirs of the main braking circuits), and are arranged in parallel with the on-off valves V1 and V2. These by-passes are constituted by a double check valve 2 with a precalibrated operating pressure. The check valve 2 is constituted by a three-way connector with a central supply passage connected to the inlet connector 1, and two delivery passages connected to the outlet connectors 21 and 22 and housing a valve slide member 4 held in a central position by two springs 6 with a predefined rating. Two non-return valves 8 are associated with the valve slide member 4 and allow air to flow from the inlet connector 1 to the outlet connectors 21 and 22.

In the event of a failure of one of the two main circuits 21, 22, the valve slide member moves to close the passage connected to the faulty circuit when the pressure difference between the two circuits 21 and 22 exceeds the rating value of the springs 6. In essence, this prior art solution compares the growing pressure of the intact circuit with the pressure of the faulty circuit (which remains at atmospheric pressure) and thus closes the faulty circuit when the pressure in the intact reservoir reaches a predetermined value.

When evaluating the performance of a valve reservoir-protection assembly, it is necessary to take into account the market trend towards providing a single valve for various applications (large and small air flow rates, main reservoirs of different volumes). The prior art arrangement described above has the disadvantage of having a very narrow field of application in that:
- it limits the imbalance allowed between the volume and\or pressure in the two main reservoirs; indeed, if the volume of one reservoir is much greater than that of the other or if the initial pressure of the two reservoirs is very different, this fact is interpreted as a fault by the device therefore the lower-pressure circuit is cut off, this being resupplied only when the corresponding protection valve V1 or V2 opens, this disrupting the priority function whereby the valves V1 and V2 should open before the valves V3 and V4,
- it allows only for by-passes of relatively small diameter since,-as a minimum value is set for the supply rate at which the device should remain effective (a small compressor operating at minimum speed)-the pressure drop in the by-pass should correspond to an increase in pressure in the intact circuit equal to the operating threshold of the double check valve.

On the other hand, limited by-passes also limit the maximum flow rate allowed (twin-cylinder compressors operating at full rate) since, with high flow rates, the pressure upstream of the by-passes would reach the opening pressure of the protection valves long before the main reservoirs were full.

The object of the present invention is to provide a valve protection assembly which is not affected by the aforesaid disadvantages.

According to the present invention, this object is achieved by a valve protection assembly, of the type defined at the start of this description, which includes a flow dividing valve having one inlet connected to the inlet connector and two outlets connected to the first and second outlet connectors respectively, the flow dividing valve being intended to divide the air flow rate at its inlet into two outlet flows which are at a substantially constant predetermined ratio to each other.

The arrangement of the invention is intended to ensure that the division of the flow between the two main circuits remains constant, independently of anything occurring downstream thereof. This system can accommodate (at least in theory) by-pass sections of any size provided that the rating at which the obturator member of the flow-dividing valve is caused to move may be reduced at will, for example by using flow-dividing valves with a membrane obturator device.

The present invention will now be described in detail, with reference to the appended drawings, provided purely by way of non-limitative example, in which:
Figure 1 is a diagram of a valve assembly according to the present invention,
Figure 2 is a diagram of a variant of the valve assembly of Figure 1,
Figure 3 is a section of a valve assembly of the invention, taken on the line III-III of Figure 4,
Figure 4 is a section taken on the line IV-IV of Figure 3,
Figure 5 is a section equivalent to that of Figure 4, illustrating a variant of the valve assembly of the invention, and
Figure 6, as stated previously, is a diagram of a prior-art valve assembly.

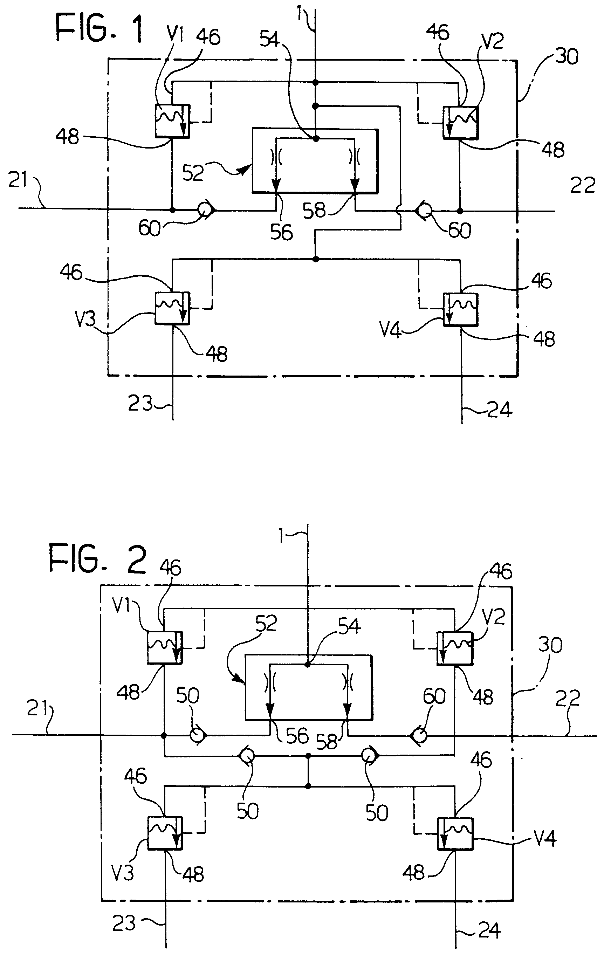

With reference to the drawings, the valve protection assembly of the invention includes a body 30 which is schematically represented as a rectangle in broken outline in Figures 1 and 2. This body has an inlet connector 1 for connection to the outlet of a compressed air supply, in particular a compressor (not shown). A pressure control device is generally arranged (in a known manner) between the outlet of the supply and the connector 1.

The body 30 also has first and second outlet connectors 21, 22, for connection to the pressure reservoirs of the first and the second vehicle braking circuits respectively, that is the circuits associated with the front axle and rear axles respectively.

Third and fourth outlet connectors 23, 24 of the body 30 are intended, on the other hand, to be connected to a parking brake system and to auxiliary pneumatic devices respectively such as, for example, the brake engine, the gear control and anything not connected with the brakes of the vehicle.

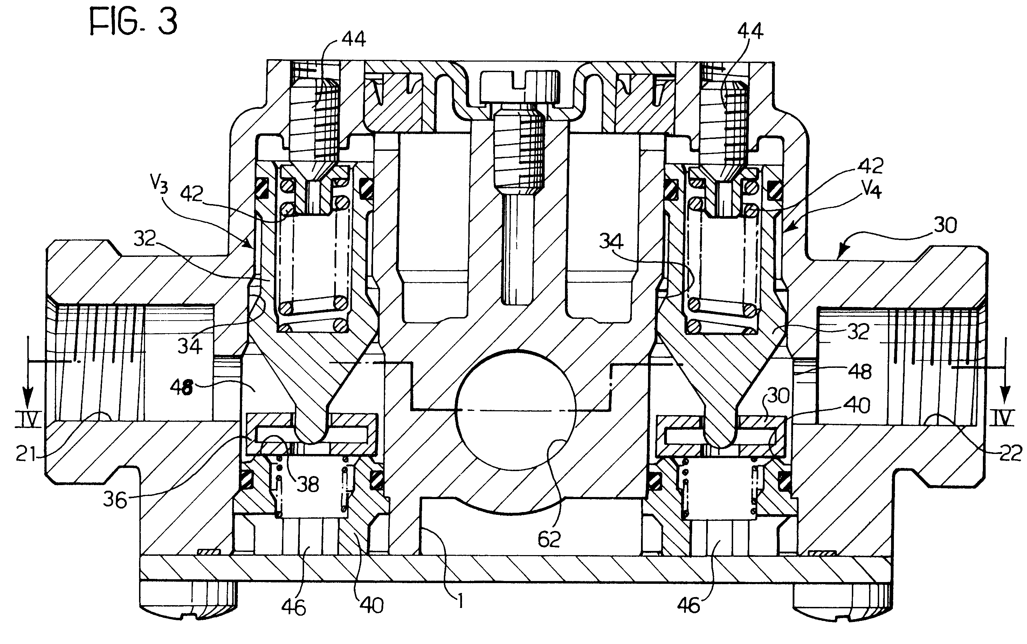

Four on-off valves, indicated V1 to V4, are formed in the body 30. With reference to Figure 3, the on-off valves V1-V4 are substantially identical and each include a piston 32 movable in a seat 34 formed in the body 30. The piston 32 carries an obturator 36 which cooperates with a valve seat 38 formed in a hollow body 40. The piston 32 is acted upon by a spring 42 and a regulator screw 44 is provided to enable the pre-loading of the spring, and thereby the opening pressure of the valve to be varied. The inlet of each valve V1-V4 opens into a respective chamber 46 in the body 40 while the outlet opens from a respective chamber 48. The geometry of each valve V1-V4 is such that its opening pressure is reduced automatically as the pressure at its outlet increases.

In the version of Figure 1, the inlets 46 of the four on-off valves V1-V4 all communicate directly with the inlet connector 1 (version with four independent outlets). In the version illustrated in Figure 2, the inlets 46 of the valves V1 and V2 communicate directly with the inlet connector 1, while the inlets 46 of the valves V3 and V4 communicate with the outlets 48 of the valves V1 and V2 with the interposition of non-return valves 50 which allow air to flow through only if this is flowing towards the inlets of the valves V3 and V4 (version with two main and two branch outlets).

Both versions of the valve assembly of the invention have a flow dividing valve 52 with an inlet 54 connected to the inlet connector 1 and two outlets 56, 58 connected to the outlet connectors 21 and 22. Downstream of the outlets 56, 58 of the flow-dividing valve 54, two non-return valves 60 allow air to flow from the inlet connector 1 to the outlet connectors 21, 22. The flow-dividing valve is a component which is in itself known and is intended to divide the air-flow entering it into two outlet flows in a predetermined ratio to each other, this ratio usually being one to one which remains substantially constant whatever the pressure at the inlet or outlet of the divider valve.

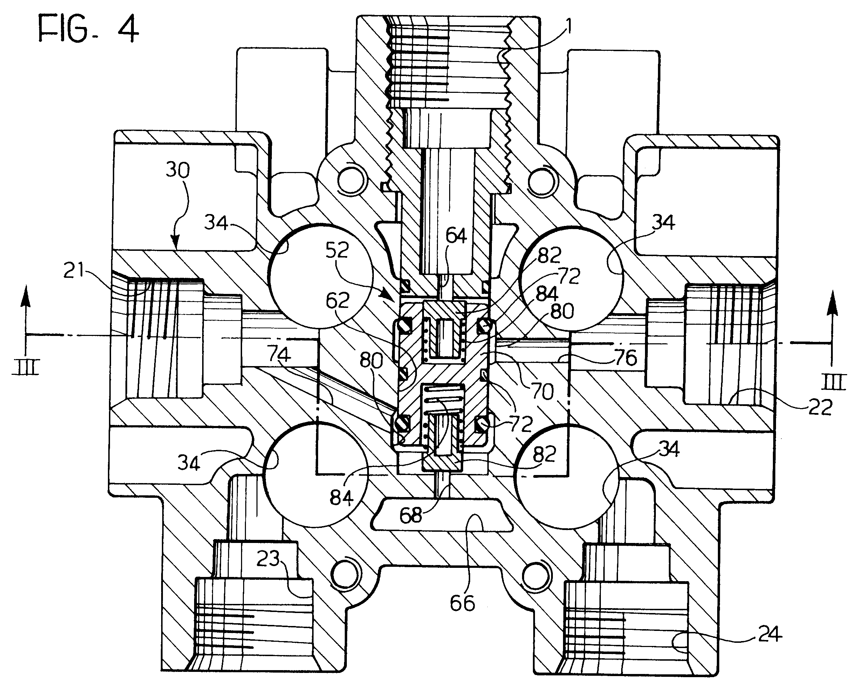

Figure 4 illustrates a first embodiment of the flow-divider valve 52. A cylindrical cavity 62 is formed in the body 30 with one end communicating with the inlet connector 1 through a first calibrated narrowed passage 64 and the other end communicating with a chamber 66 through a second narrowed passage 68. The chamber 66 communicates with the inlet connector 1 through large-section ducts (not shown in the drawing), formed in the body 30 whereby the pressure in the chamber 66 is practically identical to the pressure in the inlet connector 1. A piston 70 constituted by a rigid body carrying three annular washers 72 is slidable in the cavity 62.

Two ducts 74, 76 are also formed in the body 30 of the valve assembly which put two separate sections of the cavity 62 into communication with the outlet connectors 21 and 22 respectively. The cavity 62 has two annular grooves 80 in the regions where it meets the ducts 74 and 76.

The non-return valves 60 arranged downstream of the flow-divider valve 52 could be arranged in the ducts 74, 76 but, in order to simplify construction, in the embodiment illustrated in Figure 4, these valves are formed by two valve members 82 housed in the body of the piston 70 and urged by respective springs 84 towards valve seats defining the openings to the calibrated narrow passages 64, 68.

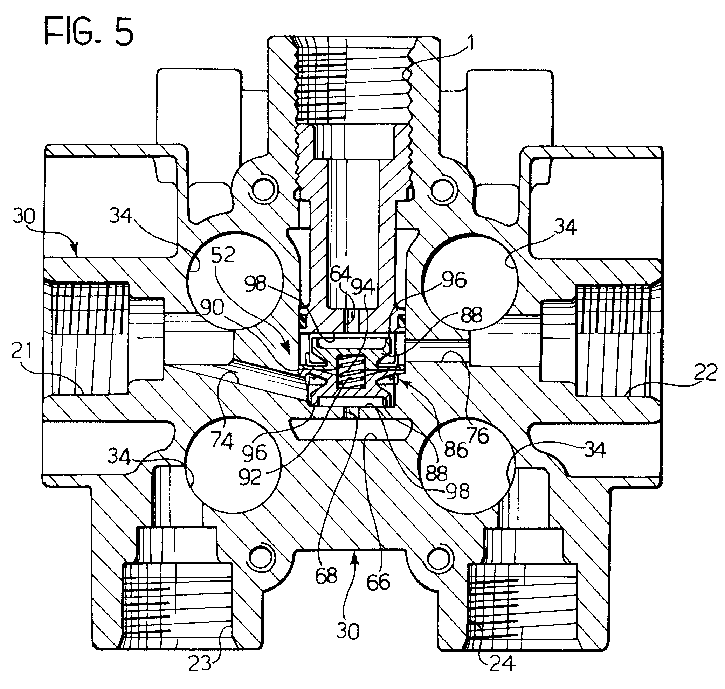

Figure 5 shows a structural variant of the flow-dividing valve 52. Details which correspond to ones described above are indicated by the same reference numbers. In the variant of Figure 5, the piston of the flow-dividing valve 52 is constituted by an element 86 which is resiliently deformable by air pressure. The deformable member 86 is constituted by two half-shells 88 of elastomeric material fixed together by a central peripheral flange 90, the shells defining a cavity 92 which houses a helical spring 94. Each half-shell 88 has an annular projection 96 which is provided to form a fluid-tight seal against a respective surface 98 around the calibrated narrowed passages 64, 68. The chamber 92 defined between the two half shells 88 is connected to the atmosphere through a duct, not shown in the drawing,, formed in the body 30. The annular projections 96 of the deformable body 86, together with the surfaces 98, constitute the non-return valves 60 shown in the diagrams of Figures 1 and 2.

The valved assembly described above operates as follows.

It is supposed initially that all the circuits connected to the outlet connectors 21-24 of the valve assembly are not pressurised. In this condition, the compressor connected to the inlet connector 1 of the valve assembly supplies pressurised air into the circuits connected to the outlet connectors 21 and 22 through the calibrated narrowed passages 64, 68 of the flow-divider valve 52 which constitute by-pass ducts in parallel with the main on-off valves V1 and V2. The increase in pressure in the outlet connectors 21 and 22 tends to open the valves V1 and V2 since, as stated above, the opening pressure of these valves decreases as the pressure at their outlets increases. This ensures that the main valves V1 and V2 open before the branch valves V3 and V4.

In the event of a failure of one of the main braking circuits, for example of the circuit connected to the connector 21, starting from the condition where the reservoirs are unpressurised, 50% of the air flowing to the flow dividing valve 52 (in the case of a dividing valve with a ratio of one to one) is sent to the intact circuit connected to the connector 22, thereby causing pressure to increase in the outlet connector 22 and consequently reducing the opening pressure of the valve V2. 50% of the air flowing to the flow-divider valve 52 is unavoidably dispersed into the atmosphere through the faulty circuit but this loss does not compromise the possibility of filling the reservoir of the intact braking section with a low air flow from the compressor.

## Claims

1. A valve protection assembly for a twin-circuit pneumatic braking system, including:
- an inlet connector (1) for connection to a pressurised air supply,
- first and second outlet connectors (21, 22) for connection to respective pressure reservoirs of the first and second braking circuits,
- third and fourth outlet connectors (23, 24) for connection to a parking brake system and auxiliary pneumatic apparatus respectively,
- first and second on-off valves (V1, V2), both normally closed, interposed between the inlet connector and the first and the second outlet connectors (21, 22) respectively, and
- third and fourth on-off valves (V3, V4) both normally closed, having their respective outlets connected to the third and fourth outlet connectors (23, 24) respectively, characterised in that it includes a flow-dividing valve (52) with an inlet (54) connected to the inlet connector and two outlets (56, 58) connected to the first and the second outlet connectors (21, 22) respectively, the flow-dividing valve (52) being intended to divide the air flow entering it into two outlet flows in a predetermined and substantially constant ratio to each other.

2. A valve assembly according to Claim 1, characterised in that it includes two non-return valves (60) associated with respective outlets (56, 58) of the flow-dividing valve (52) and arranged so as to allow air to flow from the inlet connector (1) towards the outlet connectors (21, 22).

3. A valve assembly according to Claim 2, characterised in that the flow-dividing valve (52) includes a cylindrical cavity (62) communicating at both ends with the inlet connector (1) through respective calibrated narrowed passages (64, 68) and housing a piston (70) operable to divide the flow between two outlet ducts (74, 76) communicating with the peripheral wall of the cylindrical cavity (62).

4. A valve assembly according to Claim 3, characterised in that the piston (70) of the flow-dividing valve (52) includes a rigid body in which two valve members (82) are slidable and resiliently urged towards respective valve seats defining the openings to the calibrated narrowed passages (64, 68).

5. A valve assembly according to Claim 3, characterised in that the piston (70) of the flow-dividing valve (52) includes a member (86) which is resiliently deformable by the air pressure and provided with integral valve members (96) urged towards a configuration closing the respective narrowed passages (64, 68) by the resilient energy stored by the deformable element (86).

6. A valve assembly according to any one of the preceding Claims, characterised in that the inlets of the third and fourth on-off valves (V3, V4) are connected to the inlet connector (1) upstream of the flow-dividing valve (52).

7. A valve assembly according to any one of Claims 1 to 5, characterised in that inlets of the third and fourth on-off valves (V3, V4) are connected to the outlets of the first and second on-off valves (V1, V2) and in that, between the outlets of the first and second on-off valves (V1, V2) and the inlets of the third and fourth on-off valves (V3, V4) are interposed two non-return valves (50) which allow air to flow to the inlets of the third and fourth on-off valves (V3, V4).
